# EUROPÄISCHE PATENTSCHRIFT

(11) **EP 2 080 002 B1**
(45) Veröffentlichungstag und Bekanntmachung des Hinweises auf die Patenterteilung: **19.10.2016**
(21) Anmeldenummer: 07788459.1
(22) Anmeldetag: 16.08.2007
(51) Int. Cl.: G01L 19/00, G01L 23/10, G01L 23/22, F23Q 7/00, F02P 19/02

(54) **DRUCKMESSEINRICHTUNG**
PRESSURE GAUGE
DISPOSITIF DE MESURE DE PRESSION

(30) Priorität: 13.10.2006 DE 102006049079
(43) Veröffentlichungstag der Anmeldung: 22.07.2009
(73) Patentinhaber: ROBERT BOSCH GMBH, 70442 Stuttgart (DE)
(72) Erfinder: DOERING, Christian, 70563 Stuttgart (DE); KERN, Christoph, 71546 Aspach (DE); SCHOTT, Steffen, 71701 Schwieberdingen (DE); SALTIKOV, Pavlo, 71334 Waiblingen (DE); KLEINDL, Michael, 71701 Schwieberdingen (DE); LANDES, Ewgenij, 71686 Remseck (DE)
(86) Internationale Anmeldenummer: PCT/EP2007/058496
(87) Internationale Veröffentlichungsnummer: WO 2008/043594

(56) Entgegenhaltungen:
- WO-A-2006/089446
- CH-A- 459 604
- CH-A- 476 299
- US-A- 3 566 163
- US-A- 3 651 353

## Beschreibung

### Stand der Technik

Die Erfindung betrifft eine Druckmesseinrichtung zur Anordnung in einer Kammer einer Brennkraftmaschine. Speziell betrifft die Erfindung eine Druckmessglühkerze zur Anordnung in einer Vor-, Wirbel- oder Brennkammer einer luftverdichtenden, selbstzündenden Brennkraftmaschine.

Aus der DE 103 43 521 A1 ist eine Druckmessglühkerze für einen Dieselmotor bekannt. Die bekannte Druckmessglühkerze weist einen Kerzenkörper zum Einsetzen in einen Zylinder des Dieselmotors auf. Außerdem weist die bekannte Druckmessglühkerze einen im Kerzenkörper angeordneten Heizstab und eine Sensoranordnung auf. Die Sensoranordnung steht unter einer Vorspannung zwischen dem Kerzenkörper und einem mit dem Heizstab in Verbindung stehenden Kontaktrohr, wobei ein mit dem Kontaktrohr verschraubtes Spannelement vorgesehen ist. Die Sensoranordnung liegt dabei einerseits an dem Spannelement und andererseits an dem Kerzenkörper an. Die Sensoranordnung dient zum Messen eines Druckes im Brennraum des Zylinders, der über den Heizstab und das Kontaktrohr übertragen wird. Der elektrische Anschluss der Druckmessglühkerze erfolgt über einen Anschluss und einen Innenpol, wobei der Anschluss in Gewindeform oder als Steckanschluss ausgebildet sein kann.

Die aus der DE 103 43 521 A1 bekannte Druckmessglühkerze hat zum einen den Nachteil, dass bei der Montage der Druckmessglühkerze eine Vielzahl von Einzelteilen aufeinander abgestimmt, zusammengefügt und positioniert werden muss. Die Montage gestaltet sich deshalb relativ aufwändig. Zum anderen besteht der Nachteil, dass die Sensoranordnung relativ weit am kammerfernen Ende der Druckmessglühkerze angeordnet ist, die Montage der Sensoranordnung aufwändig ist und durch Reibungsverluste oder dergleichen erzeugte Kraftnebenschlüsse die Druckmessung durch die Sensoranordnung beeinträchtigen. Aus der WO 2006/089446 A1 ist eine Glühkerze mit einem Bauteil für piezoelektrische Drucksensoren bekannt. Dieses Bauteil weist einen Übertragungskörper mit einem Stift auf, wobei der Stift eine zentrale Führung zum Durchführen eines Glühstromdrahts und Führungen für Leitungen aufweist, wodurch die Leitungen thermisch und elektrisch von dem Glühstromdraht isoliert sind. Ferner ist ein elektrisch isolierender Film vorgesehen, der mehrere Komponenten des Bauteils außen umgibt und diese mechanisch zusammenhält.

Die aus der WO 2006/089446 A1 bekannte Glühkerze hat den Nachteil, das bei der Messung eines sich ändernden Druckes eine relativ große Hysterese auftritt, die die Genauigkeit der Druckmessung verschlechtert.

CH 476 299 A offenbart einen elektrischen Drucksensor mit einem durch ein Gehäuse geführten Kontaktbolzen. Dieser Kontaktbolzen ist allerdings starr mit dem Gehäuse verbunden.

### Offenbarung der Erfindung

Die erfindungsgemäße Druckmesseinrichtung mit den Merkmalen des Anspruchs 1 hat den Vorteil, dass die Montage der Druckmessglühkerze vereinfacht ist und eine verbesserte Genauigkeit bei der Druckmessung erzielbar ist.

Durch die in den Unteransprüchen aufgeführten Maßnahmen sind vorteilhafte Weiterbildungen der im Anspruch 1 angegebenen Druckmesseinrichtung möglich.

Vorteilhaft ist es, dass das Positionierelement im Bereich der durchgehenden Aussparung zumindest eine Verengung aufweist. Durch die Verengung in der durchgehenden Aussparung weist das Positionierelement in dem Führungsbereich eine reduzierte Dicke auf, so dass eine Reibungsfläche zwischen der elektrischen Leitung, insbesondere einer Glühstromleitung, und der durchgehenden Aussparung im Führungsbereich verringert ist. Dadurch sind Reibungsverluste, die zu einer Hysterese bei der Druckerfassung führen können, verringert.

Vorteilhaft ist es, dass das Positionierelement im Bereich der durchgehenden Aussparung einen konischen Führungsabschnitt aufweist. Dabei können auch zwei konische Führungsabschnitte vorgesehen sein, die beidseitig an der durchgehenden Aussparung des Positionierelements vorgesehen sind. Durch die konischen Führungsabschnitte kann zum einen eine Verengung gebildet sein, die eine reduzierte Reibung zwischen der elektrischen Leitung und der durchgehenden Aussparung bewirkt. Zum anderen kann durch den konischen Führungsabschnitt die Montage erleichtert werden, da sich die elektrische Leitung in Bezug auf die Verengung sozusagen einfädeln lässt.

Die elektrische Leitung kann mit dem Kraftübertragungselement oder mit einem mit dem Kraftübertragungselement verbundenen weiteren Element verbunden sein. Beispielsweise kann eine Glühstromleitung mit einem als Kraftübertragungselement dienenden Heizkörper verbunden sein. Wenn sich die durch den Druck in der Kammer erzeugte Kraft über den Heizkörper überträgt, kann in diesem Fall die Glühstromleitung dieser Bewegung einen gewissen Widerstand entgegensetzen. Zur Verringerung dieses Widerstands ist es vorteilhaft, dass die elektrische Leitung, insbesondere die Glühstromleitung, einen Wendelabschnitt aufweist, der in Bezug auf das Positionierelement auf der Seite des Kraftübertragungselements angeordnet ist. Der Wendelabschnitt ermöglicht eine gewisse Flexibilität der elektrischen Leitung, um Bewegungen des Kraftübertragungselements nachzugeben. Ferner verringert die genannte Anordnung des Wendelabschnitts Bewegungen der elektrischen Leitung im Bereich des Führungsabschnitts, so dass auch die auftretenden Reibungskräfte verringert sind. Somit kann die Druckmessung weiter verbessert werden.

Vorteilhaft ist es, dass ein Druckmessmodul vorgesehen ist, das den Drucksensor und das Positionierelement umfasst, und dass der Drucksensor mittels des Positionierelements an dem Fixierelement abgestützt ist. Dadurch ergibt sich ein kompakter Aufbau der Druckmesseinrichtung, wobei die Positionierung der elektrischen Leitung durch die Montage des Druckmessmoduls gewährleistet ist, was die Montage der Druckmesseinrichtung erleichtert.

In vorteilhafter Weise umfasst das Positionierelement in einem äußeren Kraftübertragungselement einen umlaufenden Kragen. In einem mittleren Bereich weist das Positionierelement vorzugsweise eine reduzierte Dicke auf. Somit kann eine relativ hohe Stabilität des Positionierelements in einem Bereich gewährleistet werden, in dem relativ große Kräfte auf das Positionierelement wirken, während in dem mittleren Bereich die Dicke so gewählt ist, dass die in der Regel radial wirkenden Kräfte zur Positionierung der elektrischen Leitung zuverlässig aufgenommen werden.

In vorteilhafter Weise weist das Positionierelement weitere durchgehende Aussparungen auf, die zum Durchführen von Messleitungen durch das Positionierelement dienen. Die Messleitungen können dadurch von einem kammerfernen Ende der Druckmesseinrichtung zu einem relativ nahe an dem Kraftübertragungselement positionierten Drucksensor geführt werden. Vorteilhaft ist es, dass das Positionierelement eine im Wesentlichen mittige, vorzugsweise zylinderförmige Ausnehmung umfasst. Durch diese Ausbildung kann auch ein Kragen im äußeren Bereich des Positionierelements gebildet sein. Die zylinderförmige Ausnehmung kann das Angreifen eines Montagewerkzeuges ermöglichen. Dabei kann eine Montagehilfe vorgesehen sein, die hülsenförmig ausgestaltet ist und das Positionierelement sowie weitere Elemente des Druckmessmoduls, insbesondere den Drucksensor, umschließt. Das Montagewerkzeug, das in die zylinderförmige Ausnehmung eingreift, kann dann zum Einbringen des Druckmessmoduls in das Gehäuse der Druckmessglühkerze dienen. Nach dem Einbringen ist eine gewisse Vorspannung des Druckmessmoduls möglich. Dann kann im vorgespannten Zustand die Montagehilfe entfernt werden, wobei eine Zentrierung der Elemente des Druckmessmoduls gewährleistet ist. Anschließend kann das Fixierelement montiert und mit einem Sensorkäfig oder dergleichen verbunden werden, beispielsweise durch Schweißen. Die Vorspannung der Elemente des Druckmoduls ist dann durch diese Verbindung gewährleistet, so dass das Montagewerkzeug, das in die zylinderförmige Ausnehmung eingreift, entfernt werden kann. Somit kann die Montage der Druckmesseinrichtung vereinfacht werden, wobei eine Vormontage des Druckmessmoduls als Vorbaugruppe nicht erforderlich ist.

In vorteilhafter Weise ist das Positionierelement als im Wesentlichen scheibenförmiges Positionierelement ausgestaltet, wobei die durchgehende Aussparung als Durchgangsbohrung ausgebildet sein kann. Dies hat den Vorteil, dass eine kostengünstige Herstellung des Positionierelements ermöglicht ist. Ferner ergibt sich eine relativ große Druckbeständigkeit.

Das Positionierelement ist vorzugsweise aus einem Aluminiumoxid, insbesondere Al₂O₃, gebildet, wobei dem Aluminiumoxid auch Zusatzstoffe beigemischt sein können. Besonders vorteilhaft ist eine hohe Reinheit des Aluminiumoxids, um einen hohen elektrischen Isolationswiderstand zu gewährleisten. Vorteilhaft ist beispielsweise eine Reinheit von zumindest 96 %, insbesondere von zumindest 99 %.

### Kurze Beschreibung der Zeichnungen

Ein bevorzugtes Ausführungsbeispiel der Erfindung ist in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 ein Ausführungsbeispiel einer erfindungsgemäßen Druckmesseinrichtung in einer schematischen Schnittdarstellung und
Fig. 2 einen Schnitt durch in Fig. 1 gezeigte Druckmesseinrichtung entlang der mit II bezeichneten Schnittlinie.

### Ausführungsform der Erfindung

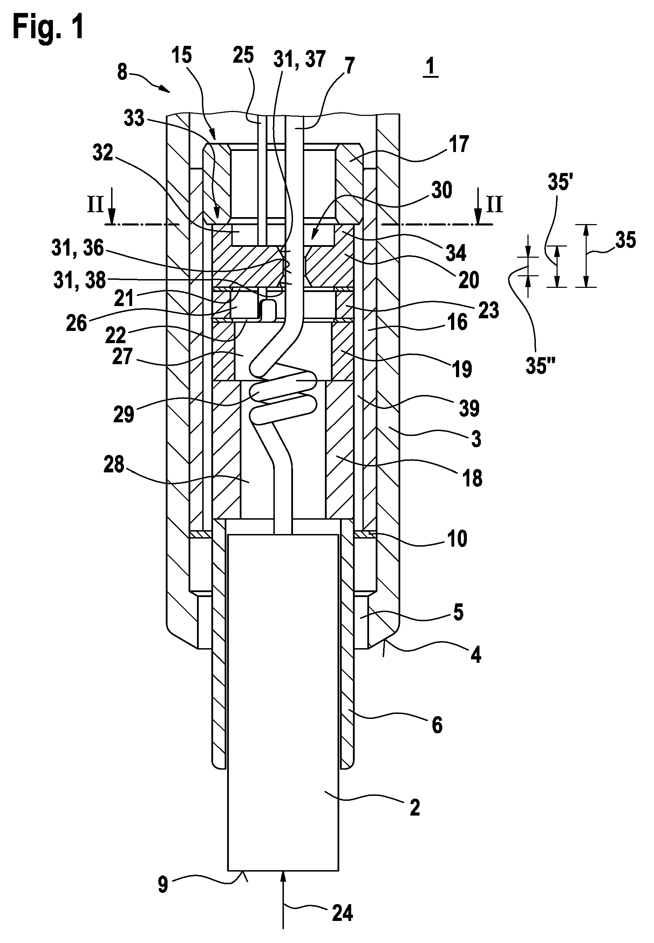

Fig. 1 zeigt ein erstes Ausführungsbeispiel einer Druckmesseinrichtung 1 in einer axialen Schnittdarstellung. Die Druckmesseinrichtung 1 ist dabei als Druckmessglühkerze 1 für eine luftverdichtende, selbstzündende Brennkraftmaschine ausgestaltet. Ein stabförmiges Heizelement 2 der Druckmessglühkerze 1 ragt bei Vor- und Wirbelkammermotoren in die Kammer der Brennkraftmaschine und bei Motoren mit Direkteinspritzung in eine Brennkammer des Motors. Die erfindungsgemäße Druckmessglühkerze 1 eignet sich jedoch auch für andere Anwendungsfälle.

Die Druckmessglühkerze 1 weist ein Gehäuse 3 mit einem Dichtkonus 4 auf. Das stabförmige Heizelement 2 ragt durch eine kammerseitige Öffnung 5 teilweise aus dem Gehäuse 3. Ferner ist ein Kraftübertragungselement 6 vorgesehen, das mit dem stabförmigen Heizelement 2 verbunden ist und dieses abschnittsweise umfasst. Das Kraftübertragungselement 6 ragt durch die kammerseitige Öffnung 5 teilweise aus dem Gehäuse 3. Das stabförmige Heizelement 2 ist mit einer als Glühstromleitung 7 ausgebildeten elektrischen Leitung 7 verbunden. Die Glühstromleitung 7 erstreckt sich dabei von einem kammerfernen Ende 8 des Gehäuses 3 durch einen Innenraum des Gehäuses 3 zu dem stabförmigen Heizelement 2.

Das stabförmige Heizelement 2 weist eine Glühspitze 9 auf, die über das Kraftübertragungselement 6 hinaussteht. Das Kraftübertragungselement 6 ist durch eine vereinfacht dargestellte Metallmembran 10 mit einem Sensorkäfig 16 verbunden. Die Metallmembran 10 ist dabei elastisch ausgestaltet, um einen Kraftnebenschluss zwischen dem Kraftübertragungselement 6 und dem Gehäuse 3 über den Sensorkäfig 16 zu reduzieren.

Der Sensorkäfig 16 ist dabei Teil eines Druckmessmoduls 15, das im Inneren des Gehäuses 3 angeordnet ist. Der Sensorkäfig 16 umfasst außerdem ein Fixierelement 17, das mit dem Sensorkäfig 16 beispielsweise durch eine Schweißnaht verbunden ist, ein Abstandselement 18, das an dem Kraftübertragungselement 6 anliegt, ein steifes Ausgleichselement 19, das an dem Abstandselement 18 anliegt, ein Positionierelement 20, das sich an dem Fixierelement 17 abstützt, Kontaktplättchen 21, 22 sowie einen zwischen den Kontaktplättchen 21, 22 angeordneten Drucksensor 23. Der Drucksensor 23 stützt sich dabei über das Positionierelement 20 an dem Fixierelement 17 ab. Ferner steht der Drucksensor 23 über das steife Ausgleichselement 19 und das Abstandselement 18 mit dem Kraftübertragungselement 6 in Wirkverbindung.

Der Drucksensor 23 ist innerhalb des Gehäuses 3 angeordnet, so dass ein zuverlässiger Schutz des Drucksensors 23 gewährleistet ist. Dabei stützt sich der Drucksensor 23 einerseits über das Positionierelement 20 an dem Fixierelement 17 ab. Andererseits steht der Drucksensor 23 über das steife Ausgleichselement 19 und das Abstandselement 18 mit dem Kraftübertragungselement 6 in Wirkverbindung, um einen in der Kammer herrschenden Druck zu erfassen. Der Druck in der Kammer erzeugt eine auf die Glühspitze 9 wirkende Kraft 24, die über das stabförmige Heizelement 2 auf das Kraftübertragungselement 6 übertragen wird. In Abhängigkeit von der Größe der Kraft 24 ergibt sich eine entsprechende Kraft auf den Drucksensor 23.

Die Kontaktplättchen 21, 22 sind mit elektrischen Messleitungen 25 verbunden, über die eine bei der Beaufschlagung des Drucksensors 23 erzeugte Messladung zu einer geeigneten Auswerteschaltung führbar ist. Der Drucksensor 23 kann beispielsweise aus einem piezoelektrischen Material bestehen. Der Drucksensor 23 weist eine durchgehende Aussparung 26 auf, die ein Anschließen der Messleitungen 25 an die Kontaktplättchen 21, 22 ermöglicht. Ferner ermöglicht die durchgehende Aussparung 26 ein Durchführen der Glühstromleitung 7 durch den Drucksensor 23. Ferner weist das steife Ausgleichselement 19 eine durchgehende Aussparung 27 auf. Außerdem weist das Abstandselement 18 eine durchgehende Aussparung 28 auf. Sowohl das Abstandselement 18 als auch das steife Ausgleichselement 19 sind jeweils hülsenförmig ausgestaltet. Durch die Aussparung 27 des steifen Ausgleichselements 19 und die Aussparung 28 des Abstandselements 18 ist die Glühstromleitung 7 von dem kammerfernen Ende 8 des Gehäuses 3 durch das steife Ausgleichselement 19 und das Abstandselement 18 zu dem stabförmigen Heizelement 2 geführt. Die hülsenförmige Ausgestaltung des Ausgleichselements 19 und des Abstandselements 18 ermöglicht die Anordnung eines Wendelabschnitts 29 der Glühstromleitung 7 zwischen dem Positionierelement 20 und dem stabförmigen Heizelement 2. Im Wendelabschnitt 29 kann die Glühstromleitung 7 eine oder mehrere Windungen aufweisen, wobei speziell etwa eine Windung bis etwa drei Windungen von Vorteil sind. Durch den Wendelabschnitt 29 wird eine gewisse Elastizität der Glühstromleitung 7 erreicht, so dass ein mechanischer Widerstand der Glühstromleitung 7 gegenüber Verstellbewegungen des stabförmigen Heizelements 2 und somit des Kraftübertragungselements 6 verringert sind.

Das Positionierelement 20 weist in einem Führungsbereich 30 eine durchgehende Aussparung 31 auf, durch die die Glühstromleitung 7 von dem kammerfernen Ende 8 zu dem stabförmigen Heizelement 2 geführt ist. Der Führungsabschnitt 30 gewährleistet dabei eine radiale Positionierung der Glühstromleitung 7 innerhalb des Gehäuses 3, so dass eine relativ hohe Schüttelbeständigkeit gewährleistet ist. Ferner ist das Positionierelement 20 aus einem elektrisch isolierenden Material gebildet, beispielsweise aus einem Aluminiumoxid, so dass ein Kurzschluss zwischen der Glühstromleitung 7 und dem Gehäuse 3 verhindert ist. Durch die Positionierung der Glühstromleitung 7 mittels des Positionierelements 20 wird dabei ein Kontakt zwischen der Glühstromleitung 7 und weiteren Elementen der Druckmessglühkerze 1, insbesondere des Druckmessmoduls 15, die elektrisch leitend ausgestaltet sein können, verhindert. Allerdings können im Bereich des kammerfernen Endes 8 weitere Elemente vorgesehen sein, um die Glühstromleitung 7 zu fixieren, die dann ebenfalls elektrisch isolierend ausgestaltet sind.

Das Positionierelement 20 weist eine zylinderförmige Ausnehmung 32 auf, die eine vorteilhafte Montage des Positionierelements zusammen mit dem Drucksensor 23, dem steifen Ausgleichselement 19 und dem Abstandselement 18 ermöglicht. Hierfür kann ein Montagewerkzeug in die zylinderförmige Ausnehmung 32 des Positionierelements 20 eingreifen, wobei das Positionierelement 20, der Drucksensor 23 mit den Kontaktplättchen 21, 22, das Ausgleichselement 19 und das Abstandselement 18 von einer hülsenförmigen Montagehilfe umgeben sind. Die hülsenförmige Montagehilfe gewährleistet dabei eine relative Positionierung der einzelnen Teile. Mittels des Montagewerkzeugs kann dann eine Vorspannung des Drucksensors 23 nach dem Einbau in das Gehäuse 3 erzielt werden. Anschließend wird die hülsenförmige Montagehilfe entfernt, so dass der hülsenförmige Luftspalt 39 innerhalb des Sensorkäfigs 16 verbleibt. Anschließend erfolgt eine Fixierung mittels des Fixierelements 17, das mit dem Sensorkäfig 16 beispielsweise durch Schweißen verbunden wird. Die Montagehilfe, die in die zylinderförmige Ausnehmung 32 eingreift, kann dann entfernt werden. Somit ist durch den Ringspalt 39 ein Kontakt zu dem Sensorkäfig 16 verhindert. Eine im Gehäuse 3 verbleibende Montagefolie, eine elektrisch isolierende Folie oder dergleichen, über die ein partieller Kontakt mit dem Sensorkäfig 16 auftreten kann, ist nicht erforderlich. Speziell sind Reibungsverluste, die bei einem partiellen Kontakt einer Folie mit dem Sensorkäfig 16 entstehen, verhindert.

Die zylinderförmige Aussparung 32 ist vorzugsweise so ausgestaltet, dass in einem äußeren Kraftübertragungsbereich 33 eine ausreichende Stabilität des Positionierelements 20 gewährleistet ist, um die bei der Druckmessung auftretenden Kräfte auf das Fixierelement 17 zu übertragen. Speziell ist der verbleibende Kragen 34 des Positionierelements 20 im äußeren Kraftübertragungsbereich 33 so ausgestaltet, dass eine relativ großflächige Abstützung an dem Fixierelement 17 ermöglicht ist. Durch die zylinderförmige Ausnehmung 32 ist außerdem eine Dicke 35' im Führungsbereich 30 gegenüber der Dicke 35, die das Positionierelement im Bereich des Kragens 34 aufweist, reduziert. Außerdem weist das Positionierelement 20 eine Verengung 36 auf, die zwischen einem konischen Führungsabschnitt 37 und einem konischen Führungsabschnitt 38 der durchgehenden Aussparung 31 gebildet ist. Im Bereich der Verengung 36 weist das Positionierelement 20 somit eine nochmals reduzierte Dicke 35" auf. Die konischen Führungsabschnitte 37, 38 sind dabei beidseitig an dem Positionierelement 20 vorgesehen. Durch die konischen Führungsabschnitte 37, 38 wird außerdem die Montage des Positionierelements 20 erleichtert, da die Glühstromleitung 7 einfacher durch die durchgehende Aussparung 31 geführt werden kann.

Im Betrieb der Druckmesseinrichtung 1 ist die Kontaktfläche zwischen der Glühstromleitung 7 und der durchgehenden Aussparung 31 in der Regel durch die Größe der Verengung 36 begrenzt. Im Grenzfall kann die Verengung 36 eine fast linienförmige Kontaktfläche vorgeben. Allerdings ist die Dicke 35" des Positionierelements 20 im Bereich der Verengung 36 der durchgehenden Aussparung 31 im Führungsbereich 30 so groß gewählt, dass eine ausreichende mechanische Stabilität zur zuverlässigen Positionierung der Glühstromleitung 7 gewährleistet ist.

Somit ist zur Verringerung der Berührungsfläche zwischen der Glühstromleitung 7 und dem Positionierelement 20, das als Zentrierscheibe ausgestaltet sein kann, die Dicke 35" des Positionierelements 20 im Führungsbereich 30 so weit verringert, dass eine dauerfeste Bauteilauslegung noch gewährleistet ist. Dadurch wird die Reibung der Glühstromleitung 7 im Führungsbereich 30 minimiert, so dass eine annähernd hysteresefreie Leitungsführung erzielt ist. Die Form und die Maße der durchgehenden Aussparung 31 können so gestaltet werden, dass der Querschnitt der durchgehenden Aussparung 31 nicht größer ist, als es für die Leitungsdurchführung der Glühstromleitung 7 erforderlich ist. Dies trägt zum einen zu einer höheren Bauteilfestigkeit bei, zum anderen wird dadurch die Amplitude von Querschwingungen der Glühstromleitung 7 eingeschränkt, so dass eine erhöhte Schüttelbeständigkeit der Glühstromleitung 7 erzielt ist. Die Montage ist dabei insbesondere durch den konischen Führungsabschnitt 38 gewährleistet.

Die durchgehende Aussparung 31 ist vorzugsweise durch eine Durchgangsbohrung gebildet, die beidseitig angeschrägt sind. Es sind allerdings auch andere Ausgestaltungen der durchgehenden Aussparung 31 denkbar. Speziell können die Führungsabschnitte 37, 38 auch durch Abrundungen oder dergleichen ausgestaltet sein. Außerdem ist das Positionierelement 20 vorzugsweise zumindest im Wesentlichen scheibenförmig ausgestaltet. Dadurch kann die Gesamtlänge des Druckmessmoduls 15 verringert werden. Ferner ist die Länge des Abstandselements 18 dahingehend optimiert, dass der Wendelabschnitt 29 zwischen dem Drucksensor 23 und dem stabförmigen Heizelement 2 angeordnet werden kann.

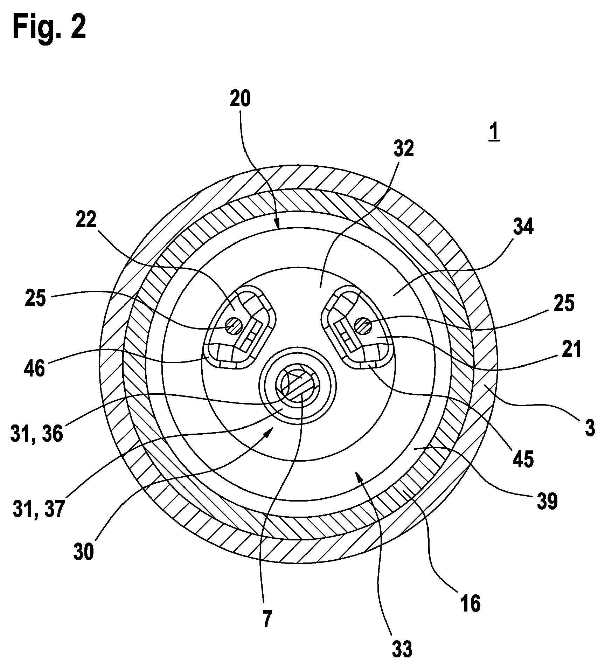

Fig. 2 zeigt einen Schnitt durch die in Fig. 1 dargestellte Druckmesseinrichtung 1 entlang der mit II bezeichneten Schnittlinie. Das Positionierelement 20 weist weitere durchgehende Aussparungen 45, 46 auf, durch die die elektrischen Messleitungen 25 von dem kammerfernen Ende 8 des Gehäuses 3 zu den Kontaktplättchen 21, 22 geführt sind. Die durchgehenden Aussparungen 45, 46 gewährleisten dabei eine gewisse Verdrehsicherung für die elektrischen Messleitungen 25. Das verbleibende Material des Positionierelements 20 zwischen den durchgehenden Aussparungen 31, 45, 46 ist dabei so groß gewählt, dass eine ausreichende Stabilität des Positionierelements 20 gewährleistet ist. Dabei kann die Position der durchgehenden Aussparung 31 des Positionierelements 20, die zum Durchführen der Glühstromleitung 7 dient, auch etwas aus einer zentrierten Position verschoben werden, wie es in der Fig. 2 dargestellt ist. Die Glühstromleitung 7 ist dann im Wesentlichen koaxial durch das Gehäuse 3 geführt.

Ein Vorteil der beschriebenen Ausgestaltung ist, dass die Länge des Kraftpfades im Druckmessmodul verkürzt ist. Somit kann der Drucksensor 23 relativ nahe am Dichtkonus 4 angeordnet sein, an dem durch den Kontakt mit der Brennkraftmaschine eine relativ niedrige Temperatur herrscht. Außerdem sind Eigenfrequenzen des Druckmessmoduls erhöht, so dass die Signalfrequenz des Meßsignals verbessert ist.

Die Erfindung ist nicht auf das beschriebene Ausführungsbeispiel beschränkt. Insbesondere kann das Positionierelement 20 auch scheibenförmig ausgestaltet sein, wobei die zylinderförmige Ausnehmung 32 entfällt.

## Patentansprüche

1. Druckmessglühkerze (1) für eine luftverdichtende, selbstzündende Brennkraftmaschine mit einem Gehäuse (3), einem Kraftübertragungselement (6), das zumindest teilweise aus dem Gehäuse (3) ragt, und mit einem Drucksensor (23), der in einem Innenraum des Gehäuses (3) angeordnet ist, wobei der Drucksensor (23) einerseits zumindest mittelbar an einem Fixierelement (17) abgestützt ist und zum Erfassen eines in der Kammer herrschenden Druckes dient und andererseits zumindest mittelbar mit dem Kraftübertragungselement (6) in Wirkverbindung steht, wobei der Drucksensor (23) eine durchgehende Aussparung (26) aufweist, durch die eine Glühstromleitung (7) geführt ist, wobei ein Positionierelement (20) vorgesehen ist, das in in einem Führungsbereich (30) eine durchgehende Aussparung (31) aufweist, und wobei die Glühstromleitung (7) durch die durchgehende Aussparung (31) geführt ist,
**dadurch gekennzeichnet,**
**dass** das Positionierelement (20) zumindest eine mittige, zylinderförmige Ausnehmung (32) und in einem äußeren Kraftübertragungsbereich (33) einen umlaufenden Kragen (34) aufweist, so dass das Positionierelement (20) im Führungsbereich (30) eine reduzierte Dicke (35'; 35") aufweist und der Kragen (34) in einem äußeren Kraftübertragungsbereich eine großflächige Abstützung am Fixierelement (17) ermöglicht, dass das Positionierelement (20) im Bereich der durchgehenden Aussparung (31) zumindest eine Verengung (36) aufweist und dass der Drucksensor (23) mittels des Positionierelements (20) an dem Fixierelement (17) abgestützt ist.

2. Druckmessglühkerze nach Anspruch 1,
**dadurch gekennzeichnet,**
**dass** das Positionierelement (20) im Bereich der durchgehenden Aussparung (31) zumindest einen konischen Führungsabschnitt (37, 38) aufweist.

3. Druckmessglühkerze nach Anspruch 1 oder 2,
**dadurch gekennzeichnet,**
**dass** die Glühstromleitung (7) zumindest eine Wendelabschnitt (29) aufweist, der in Bezug auf das Positionierelement (20) auf der Seite des Kraftübertragungselements (6) angeordnet ist.

4. Druckmessglühkerze nach einem der Ansprüche 1 bis 3,
**dadurch gekennzeichnet,**
**dass** ein Druckmessmodul (15) vorgesehen ist, das den Drucksensor (23) und das Positionierelement (20) umfasst.

5. Druckmessglühkerze nach Anspruch 1,
**dadurch gekennzeichnet,**
**dass** das Positionierelement (20) zumindest eine weitere durchgehende Aussparung (45, 46) aufweist und dass zumindest eine Messleitung (25) durch die weitere durchgehende Aussparung (45, 46) von einem kammerfernen Ende (8) zu dem Drucksensor (23) geführt ist.

6. Druckmessglühkerze nach einem der Ansprüche 1 bis 5,
**dadurch gekennzeichnet,**
**dass** das Positionierelement (20) als zumindest im Wesentlichen scheibenförmiges Positionierelement (20) ausgestaltet ist.

7. Druckmessglühkerze nach einem der Ansprüche 1 bis 6,
**dadurch gekennzeichnet,**
**dass** die durchgehende Aussparung (31) des Positionierelements (20) als Durchgangsbohrung ausgestaltet ist.

8. Druckmessglühkerze nach einem der Ansprüche 1 bis 7,
**dadurch gekennzeichnet, dass** das Positionierelement (20) aus zumindest einem Aluminiumoxid gebildet ist.

## Claims

1. Pressure-measurement glow plug (1) for an air-compressing, auto-ignition internal combustion engine, having a housing (3), having a force-transmitting element (6) which projects at least partially out of the housing (3), and having a pressure sensor (23) which is arranged in an interior space of the housing (3), wherein the pressure sensor (23), at one side, is supported at least indirectly on a fixing element (17) and serves for detecting a pressure prevailing in the chamber and, at the other side, is at least indirectly operatively connected to the force-transmitting element (6), wherein the pressure sensor (23) has a through-opening (26), through which through-opening a glow current line (7) is led, wherein a positioning element (20) is provided which, in a guide region (30), has a through-opening (31), and wherein the glow current line (7) is led through the through-opening (31),
**characterized**
**in that** the positioning element (20) has at least one central, cylindrical recess (32) and has an encircling collar (34) in an outer force-transmitting region (33), such that the positioning element (20) has a reduced thickness (35'; 35") in the guide region (30) and the collar (34), in an outer force-transmitting region, permits support on the fixing element (17) over a large area, in that the positioning element (20) has at least one narrowing (36) in the region of the through-opening (31), and in that the pressure sensor (23) is supported on the fixing element (17) by way of the positioning element (20).

2. Pressure-measurement glow plug according to Claim 1,
**characterized**
**in that** the positioning element (20) has at least one conical guide section (37, 38) in the region of the through-opening (31).

3. Pressure-measurement glow plug according to Claim 1 or 2,
**characterized**
**in that** the glow current line (7) has at least one coil section (29) which is arranged, in relation to the positioning element (20), on the side of the force-transmitting element (6).

4. Pressure-measurement glow plug according to one of Claims 1 to 3,
**characterized**
**in that** a pressure-measurement module (15) is provided which comprises the pressure sensor (23) and the positioning element (20).

5. Pressure-measurement glow plug according to Claim 1,
**characterized**
**in that** the positioning element (20) has at least one further through-opening (45, 46), and in that at least one measurement line (25) is led through the further through-opening (45, 46) from an end (8) averted from the chamber to the pressure sensor (23).

6. Pressure-measurement glow plug according to one of Claims 1 to 5,
**characterized in that** the positioning element (20) is in the form of an at least substantially disk-shaped positioning element (20).

7. Pressure-measurement glow plug according to one of Claims 1 to 6,
**characterized**
**in that** the through-opening (31) of the positioning element (20) is in the form of a through-bore.

8. Pressure-measurement glow plug according to one of Claims 1 to 7,
**characterized**
**in that** the positioning element (20) is formed from at least one aluminium oxide.

## Revendications

1. Bougie à incandescence de mesure de pression (1) pour un moteur à combustion à compression d'air et auto-allumage avec un corps (3), un élément de transmission de force (6), qui sort au moins en partie hors du corps (3), et avec un capteur de pression (23), qui est disposé dans une chambre intérieure du corps (3), dans laquelle le capteur de pression (23) est d'une part supporté au moins indirectement sur un élément de fixation (17) et sert pour détecter une pression régnant dans la chambre et est d'autre part en liaison active au moins indirectement avec l'élément de transmission de force (6), dans laquelle le capteur de pression (23) présente un évidement continu (26), à travers lequel un conducteur du courant d'incandescence (7) est mené, dans laquelle il est prévu un élément de positionnement (20), qui présente un évidement continu (31) dans une région de guidage (30), et dans laquelle le conducteur du courant d'incandescence (7) est mené à travers l'évidement continu (31),
**caractérisée en ce que** l'élément de positionnement (20) présente au moins un dégagement cylindrique central (32) et un rebord périphérique (34) dans une région extérieure de transmission de force (33), de telle manière que l'élément de positionnement (20) présente une épaisseur réduite (35'; 35") dans la région de guidage (30) et que le rebord (34) permette un appui de grande surface sur l'élément de fixation (17) dans une région extérieure de transmission de force, **en ce que** l'élément de positionnement (20) présente au moins un rétrécissement (36) dans la région de l'évidement continu (31) et **en ce que** le capteur de pression (23) est supporté sur l'élément de fixation (17) au moyen de l'élément de positionnement (20).

2. Bougie à incandescence de mesure de pression selon la revendication 1, **caractérisée en ce que** l'élément de positionnement (20) présente dans la région de l'évidement continu (31) au moins une partie de guidage conique (37, 38).

3. Bougie à incandescence selon la revendication 1 ou 2, **caractérisée en ce que** le conducteur du courant d'incandescence (7) présente au moins une partie en spirale (29), qui est disposée sur le côté de l'élément de transmission de force (6) par rapport à l'élément de positionnement (20).

4. Bougie à incandescence de mesure de pression selon l'une quelconque des revendications 1 à 3, **caractérisée en ce qu'**il est prévu un module de mesure de pression (15), qui comprend le capteur de pression (23) et l'élément de positionnement (20).

5. Bougie à incandescence de mesure de pression selon la revendication 1, **caractérisée en ce que** l'élément de positionnement (20) présente au moins un autre évidement continu (45, 46) et **en ce qu'**au moins une conduite de mesure (25) est menée à travers l'autre évidement continu (45, 46) d'une extrémité (8) éloignée de la chambre jusqu'au capteur de pression (23).

6. Bougie à incandescence de mesure de pression selon l'une quelconque des revendications 1 à 5, **caractérisée en ce que** l'élément de positionnement (20) est configuré comme un élément de positionnement (20) au moins essentiellement en forme de disque.

7. Bougie à incandescence de mesure de pression selon l'une quelconque des revendications 1 à 6, **caractérisée en ce que** l'évidement continu (31) de l'élément de positionnement (20) est réalisé sous la forme d'un alésage traversant.

8. Bougie à incandescence de mesure de pression selon l'une quelconque des revendications 1 à 7, **caractérisée en ce que** l'élément de positionnement (20) est formé d'au moins un oxyde d'aluminium.
